# EUROPÄISCHE PATENTSCHRIFT

(11) **EP 2 948 363 B1**
(45) Veröffentlichungstag und Bekanntmachung des Hinweises auf die Patenterteilung: **21.09.2016**
(21) Anmeldenummer: 14701041.7
(22) Anmeldetag: 21.01.2014
(51) Int. Cl.: B62D 35/02, B62D 37/02

(54) **FAHRZEUG, INSBESONDERE RENNFAHRZEUG**
VEHICLE, IN PARTICULAR RACING VEHICLE
VÉHICULE, NOTAMMENT VÉHICULE DE COURSE

(30) Priorität: 22.01.2013 AT 500352013; 07.03.2013 AT 501542013
(43) Veröffentlichungstag der Anmeldung: 02.12.2015
(73) Patentinhaber: AVL List GmbH, 8020 Graz (AT)
(72) Erfinder: SCHOEGGL, Peter, A-8151 Hitzendorf (AT)
(74) Vertreter: Babeluk, Michael
(86) Internationale Anmeldenummer: PCT/EP2014/051076
(87) Internationale Veröffentlichungsnummer: WO 2014/114611

(56) Entgegenhaltungen:
- WO-A1-2012/062785
- DE-A1- 3 410 296
- DE-A1-102008 039 495
- DE-U1- 20 016 748

## Beschreibung

Die Erfindung betrifft ein Fahrzeug, insbesondere Rennfahrzeug, mit einer eine Brennkraftmaschine aufweisenden Antriebseinheit, mit zumindest einem Wärme abgebenden Bauteil oder einer Wärme abgebenden Baugruppe, wobei der Bauteil oder die Baugruppe an zumindest einen von einem Arbeitsgas, insbesondere Luft, durchströmten Raum grenzt, insbesondere zumindest teilweise von dem durchströmten Raum umgeben ist, wobei der Raum einen Strömungseintritt und einen Strömungsaustritt aufweist und der Strömungsaustritt im Bereich einer abtriebserhöhenden Einrichtung des Fahrzeuges angeordnet ist. Weiters betrifft die Erfindung ein Verfahren zum Erhöhen des Abtriebs bei einem Fahrzeug.

Bei Renn- und Sportfahrzeuge werden Beschleunigungen, Verzögerungen und Kurvenbeschleunigungen erzielt, die den Wert von 1 g (= Erdbeschleunigung) erheblich überschreiten. Solche Werte sind nur möglich, wenn die Haftungsgrenzen zwischen den Reifen und der Fahrbahnoberfläche mit aerodynamischen Hilfsmitteln heraufgesetzt werden. Am Fahrzeugkörper wird starker Abtrieb erzeugt. Diesem Zweck dienen Frontflügel, Heckflügel und eine besondere Formgebung des eigentlichen Fahrzeugkörpers. Eine dominierende Rolle spielt dabei die Gestaltung des Fahrzeugunterbodens. Es wird angestrebt, die unter dem Fahrzeugboden strömende Luft so stark wie nur möglich zu beschleunigen. Je höher deren Geschwindigkeit, desto stärker ist nach dem Bernoullischen Gesetz deren Saugkraft und desto stärker ist der auf den Fahrzeugunterboden ausgeübte Abtrieb. Um eine möglichst starke Beschleunigung der Unterbodenluft zu erreichen, wird bei heutigen Rennfahrzeugen die kinetische Energie der Abgase herangezogen: Der Unterboden wird am Heck des Fahrzeugs nach oben gebogen und meist mit senkrechten aerodynamischen Luftleitblechen zur Seite hin abgeschirmt und eventuell noch in der Mitte unterteilt. Auf diese Weise entsteht für die Luft, die unter dem Fahrzeug entlang strömt, ein Diffusor. In diese Diffusorzone werden die Enden der Auspuffrohre mit waagrechten nach hinten zielender Strahlrichtung eingeleitet. Die mit hoher Geschwindigkeit austretenden Abgase üben auf die Luft unter dem Unterboden eine Saugwirkung aus. Sie erhöhen deren Geschwindigkeit und damit deren Saugwirkung auf den Unterboden und somit den Abtrieb des Fahrzeugs.

Aus der AT 510.623 B1 ist ein Fahrzeug mit einer Wärmekraftanlage zur Rückgewinnung von Wärme aus dem Auslasssystem mit einer Heißluftturbine bekannt, welche einen Verdichter antreibt, der Luft als Arbeitsgas in einen das Auslasssystem ummantelnden Raum fördert, dessen Austritt mit der Heißluftturbine verbunden ist. Die Austrittsöffnung des Austrittsströmungswegs der Heißluftturbine ist im Bereich einer abtriebserhöhenden Einrichtung angeordnet, welche durch einen durch den Fahrzeugboden gebildeten Diffusor gebildet ist. Durch die Volumenzunahme durch Wärmezufuhr und das darauf folgende Ausströmen des Arbeitsgases im Bereich des Diffusors kann ein zusätzlicher Abtrieb generiert werden. Nachteilig ist allerdings, dass die Heißluftturbine aus dem Ruhezustand durch externe Mittel gestartet werden muss.

Die Veröffentlichung DE 103 50 375 A1 offenbart ein Verfahren und eine Vorrichtung zum Kühlen eines Achsdifferenzial einer Antriebsachse eines Kraftfahrzeuges, wobei die Kühlung erreicht wird, indem ein verstellbarer Kühllufteinlauf an dem Unterboden des Kraftfahrzeuges für die Weiterleitung der Luft in Richtung Achsdifferenzial sorgt. Eine Erhöhung bzw. Verbesserung des Abtriebs des Fahrzeuges wird weder explizit, noch implizit offenbart. Im Gegenteil: ein Kühllufteinlauf auf dem Unterboden unterbricht den Luftstrom unter dem Fahrzeug und vermindert somit die Sogwirkung anstatt sie zu erhöhen.

Die WO 83/01421 A1 beschreibt einen Diffusor für den Abtrieb eines Fahrzeuges, wobei die geometrische Ausgestaltung des Diffusors beschrieben ist. Außer dem Diffusor ist in der WO 83/01421 A1 keine abtriebserhöhende Einrichtung vorgesehen.

Aufgabe der Erfindung ist es, auf möglichst einfache Weise unter Ausnutzung der Abwärme zumindest eines Bauteiles oder zumindest einer Baugruppe die Straßenlage des Fahrzeuges zu verbessern.

Erfindungsgemäß wird dies dadurch erreicht, dass der durchströmte Raum zwischen zumindest einem Strömungseintritt und zumindest einem Strömungsaustritt zumindest einen Strömungsabschnitt mit diffusorartig sich erweiterndem Strömungsquerschnitt aufweist.

Der Wärme abgebende Bauteil oder die Wärme abgebenden Baugruppe kann dabei beispielsweise durch das Auslasssystem der Brennkraftmaschine gebildet sein. Die Wärme des Auslasssystems kann besonders effektiv genutzt werden, wenn das Auslasssystem zumindest einen von mindestens einem luftdurchströmten Raum umgebenen Abgaskrümmer und/oder zumindest einen von mindestens einem luftdurchströmten Raum umgebenen Abgaskanal im Zylinderkopf der Brennkraftmaschine aufweist.

Die Eintrittsöffnung des Strömungseintrittes ist dabei in Fahrrichtung gerichtet. In einer bevorzugten Ausführung der Erfindung ist dabei vorgesehen, dass zumindest ein Fahrzeugkühler im Bereich zumindest eines Strömungseintrittes angeordnet ist. Die einströmende Luft wird dabei durch den Kühler vorgewärmt.

Der Fahrzeugkühler kann dabei außerhalb des Raumes stromaufwärts des Strömungseintrittes oder stromabwärts der Eintrittsöffnung innerhalb des Raumes angeordnet sein.

Der durchströmte Raum ist bevorzugt ein Mantelraum, welcher den Bauteil oder die Baugruppe zumindest teilweise, vorzugsweise überwiegend, umgibt. Durch den Staudruck tritt während der Fahrt Luft in den Raum ein und umströmt entlang des Mantelraumes den wärmeabgebenden Bauteil bzw. die wärmeabgebende Baugruppe.

Verluste durch Leitungsumlenkungen lassen sich möglichst vermeiden, wenn das Auslasssystem und der dieses zumindest teilweise umgebende Mantelraum in gleicher Richtung durchströmt werden. Der durchströmte Raum bildet somit zusammen mit dem Auslasssystem zumindest teilweise einen Wärmetauscher aus.

Die zumindest eine Austrittsöffnung des Strömungsaustrittes des durchströmten Raumes ist so angeordnet, dass der entstehende Überdruck den Wirkungsgrad des aerodynamischen Bauteils erhöht. Dadurch kann der Abtrieb des Fahrzeuges wesentlich erhöht werden.

Die abtriebserhöhende Einrichtung kann dabei durch einen vorzugsweise durch einen Fahrzeugunterboden des Fahrzeuges gebildeten Diffusor im Heckbereich des Fahrzeuges gebildet sein, wobei zumindest eine Austrittsöffnung des Strömungsaustrittes des durchströmten Raumes im Bereich des Diffusors angeordnet ist.

Insbesondere kann dabei vorgesehen sein, dass zumindest eine Austrittsöffnung des Strömungsaustrittes im Austrittsbereich des Diffusors, vorzugsweise teilweise gebildet durch eine Austrittskante des Diffusors, angeordnet ist. Die Austrittsöffnung kann auch - in Fahrtrichtung gesehen - seitlich neben dem Diffusor - vorzugsweise in einem einem Hinterrad des Fahrzeuges zugewandten Bereich des Diffusors - oder über der Austrittskante des Diffusors angeordnet sein. Dadurch kann auf möglicherweise störende Öffnungen im Diffusor verzichtet werden. Insbesondere bei seitlichem Austritt ist es vorteilhaft, wenn der Raum am Ende des Wärmetauschers bzw. am Ende des Mantelraumes in zwei seitliche Austrittsbereiche aufgeteilt ist. Dabei ist in einer besonders vorteilhaften Ausführungsvariante vorgesehen, dass die Austrittsöffnung des Strömungsaustrittes im Anfangsbereich des Diffusors - vorzugsweise im Bereich eines durch einen Knick gebildeten Überganges zwischen einem im Wesentlichen fahrbahnparallelen und einem - entgegen der Fahrtrichtung gesehenen - ansteigenden Bereich des Fahrzeugunterbodens angeordnet ist. Die Austrittsöffnung des Strömungsaustrittes für die erwärmte Luft ist dabei vorzugsweise derart angeordnet, dass ein seitlicher Druckausgleich zwischen der Umgebung in einem seitlichen Bereich des Diffusors und dem Raum innerhalb des Diffusors behindert wird.

Die Luft weist vor dem Einströmen in den Wärmetauscher eine Temperatur von etwa 30°C auf. In dem Wärmetauscher wird die Luft durch die heißen Abgase des Auslasssystems auf mehrere 100°C erwärmt. Die Volumenzunahme führt zu hohen Austrittsgeschwindigkeiten aus dem durchströmten Raum, insbesondere wenn der Strömungsaustritt des Raumes als Düse ausgebildet ist. Die mit hoher Geschwindigkeit austretende heiße Luft übt auf die Luft unter dem Fahrzeugboden eine Saugwirkung aus. Sie erhöht deren Geschwindigkeit und damit die Saugwirkung auf den Unterboden, was zu einer deutlichen Abtriebserhöhung des Fahrzeugs führt.

Berechnungen und Versuche haben gezeigt, dass die besten Ergebnisse erzielt werden können, wenn der Strömungseintritt einen geringeren Strömungsquerschnitt aufweist, als der Strömungsaustritt.

Im Detail ist zwischen dem zumindest einen Eintrittsbereich und dem zumindest einen Austrittsbereich zumindest ein von zumindest einer Eintrittsöffnung in einem definierten Abstand entfernter Strömungsquerschnitt oder eine Gruppe von Strömungsquerschnitten vorhanden, dessen Querschnittsfläche bzw. deren Summe der Querschnittsflächen größer ist als der kleinste Strömungsquerschnitt der Eintrittsöffnung bzw. die Summe der kleinsten Strömungsquerschnitte aller Eintrittsöffnungen, und kleiner ist als der größte Strömungsquerschnitt des Austrittsbereichs bzw. die Summe der Strömungsquerschnitte aller Austrittsbereiche.

Besonders vorteilhaft ist es, wenn die Summe aller von der Eintrittsöffnung gleich entfernten Strömungsquerschnitte - bei Fortschreiten in Strömungsrichtung des Raumes - zwischen den Strömungseintritten, insbesondere den Eintrittsöffnungen, und der größten Querschnittsfläche des Strömungsquerschnittes des zumindest einen Strömungsaustrittes - vorzugsweise kontinuierlich - zunimmt.

Die Summe der Querschnittsflächen am Beginn des oder der Strömungseintritte(s) ist dabei in vorteilhafter Weise geringer, als die größte Querschnittsfläche des Strömungsaustrittes.

Große Schluckmengen lassen sich erzielen, wenn der Raum zwischen dem Strömungseintritt und dem ersten Strömungsquerschnitt als erster Diffusorbereich ausgebildet ist, wobei es besonders von Vorteil ist, wenn der Raum zwischen dem Anfangsbereich und dem Endbereich des Wärmetauschers als zweiter Diffusor ausgebildet ist, wobei vorzugsweise der zweite Diffusorbereich mehrere hintereinander- und/oder parallelgeschaltete Teilbereiche aufweist.

In einer besonders für Rennfahrzeuge geeigneten Ausführungsvariante der Erfindung ist vorgesehen, dass der Raum zumindest zwei seitliche Äste mit jeweils einem Strömungseintritt aufweist, wobei vorzugsweise sich die Äste stromaufwärts des Strömungsaustrittes - besonders vorzugsweise im Bereich oder stromabwärts des oder der Abgaskrümmer(s) - zu einem Sammelraum vereinigen. Die Eintrittsöffnungen können somit beidseitig im Bereich von seitlichen Luft- oder Kühlkanälen angeordnet sein.

Somit strömt Luft durch Staudruck durch zumindest einen der Fahrtrichtung zugewandten Strömungseintritt in zumindest einen heiße Oberflächen des Auslasssystems, vorzugsweise Abgaskanäle, Abgaskrümmer, und/oder Abgasturbine, umgebenden Raum ein, umströmt sodann die heißen Oberflächen des Auslasssystems und nimmt dabei eine - vorzugsweise maximal mögliche - Wärmemenge auf, wobei die Luft expandiert. Schließlich strömt die heiße Luft aus dem Raum durch zumindest einen Strömungsaustritt im Bereich eines, vorzugsweise durch den Fahrzeugboden des Fahrzeugs gebildeten Diffusors - besonders vorzugsweise seitlich im Anfangsbereich des Diffusors - mit höherer Geschwindigkeit als die Fahrtgeschwindigkeit so aus, dass der Druck im Inneren des Diffusor vermindert und/oder ein Druckausgleich zwischen der Umgebung und dem Inneren des Diffusor verhindert oder verringert wird, indem die ausströmende Luft eine den Luftaustausch hindernden Luftvorhang zwischen der Umgebung und dem an sich seitlich offenen Diffusor bildet. Durch den höheren Unterdruck im Inneren des Diffusors kann der Abtrieb des Fahrzeuges wesentlich erhöh werden.

Die abtriebserhöhende Wirkung stellt sich automatisch ab einer gewissen Fahrgeschwindigkeit durch den zunehmenden Staudruck ein und nimmt mit der Fahrgeschwindigkeit zu. Bei der erfindungsgemäßen Anordnung ist keine zusätzliche Einrichtung zum Starten des Systems notwendig.

Die Erfindung wird im Folgenden anhand der Figuren näher erläutert. Es zeigen:
- Fig. 1: ein erfindungsgemäßes Fahrzeug in einer Draufsicht in einer ersten Ausführungsvariante;
- Fig. 2: dieses Fahrzeug in einer Seitenansicht;
- Fig. 3: dieses Fahrzeug in einer Heckansicht;
- Fig. 4: ein erfindungsgemäßes Fahrzeug in einer Draufsicht in einer zweiten Ausführungsvariante,
- Fig. 5: dieses Fahrzeug in einer Seitenansicht;
- Fig. 6: dieses Fahrzeug in einer Heckansicht;
- Fig. 7: ein erfindungsgemäßes Fahrzeug in einer Draufsicht in einer dritten Ausführungsvariante;
- Fig. 8: dieses Fahrzeug in einer Seitenansicht;
- Fig. 9: dieses Fahrzeug in einer Heckansicht;
- Fig. 10: ein erfindungsgemäßes Fahrzeug in einer Draufsicht in einer vierten Ausführungsvariante;
- Fig. 11: dieses dieses Fahrzeug in einer Heckansicht;
- Fig. 13: ein erfindungsgemäßes Fahrzeug in einer Draufsicht in einer fünften Ausführungsvariante;
- Fig. 14: dieses Fahrzeug in einer Seitenansicht;
- Fig. 15: dieses Fahrzeug in einer Heckansicht;
- Fig. 16: ein Detail Fahrzeug in einer Seitenansicht;

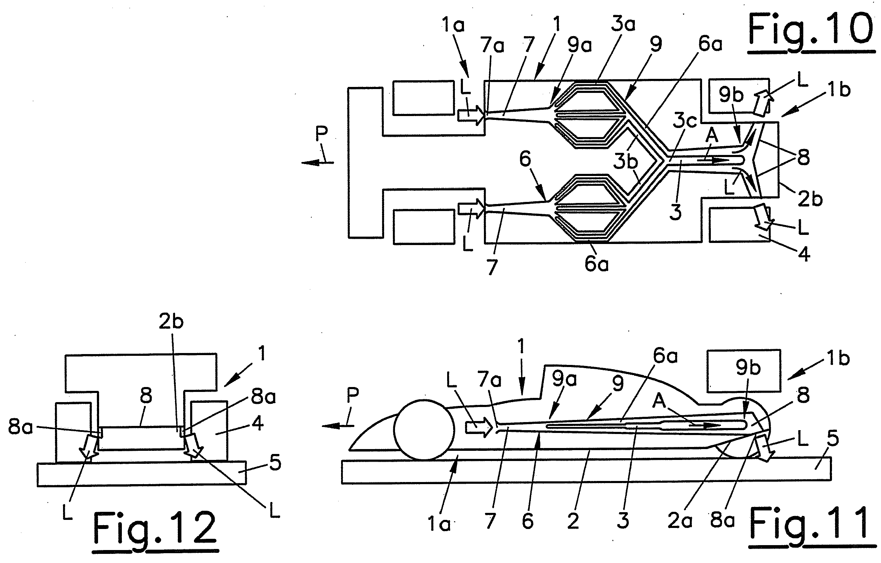

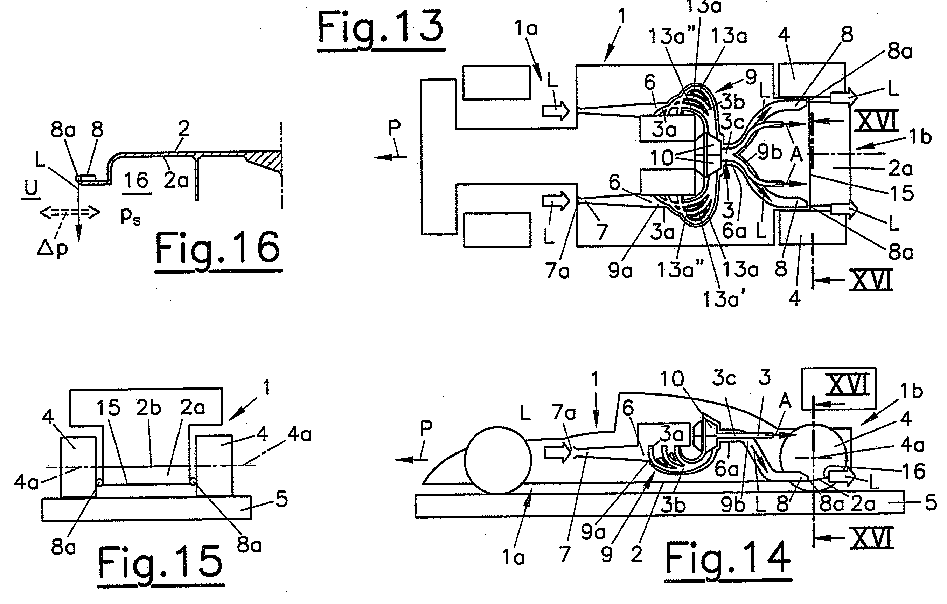

- Fig. 12: dieses Fahrzeug in einem Schnitt gemäß der Linie XVI-XVI in Fig. 13 oder Fig. 14; und

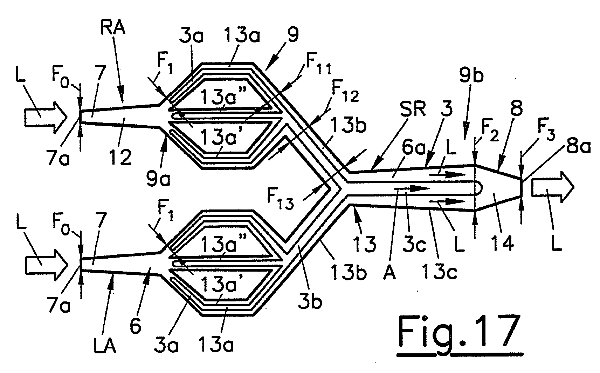

- Fig. 17: den Querschnittsverlauf des erfindungsgemäßen Fahrzeuges nach der ersten, zweiten, dritten, fünften Ausführungsvariante.

Funktionsgleiche Teile sind mit gleichen Bezugszeichen versehen.

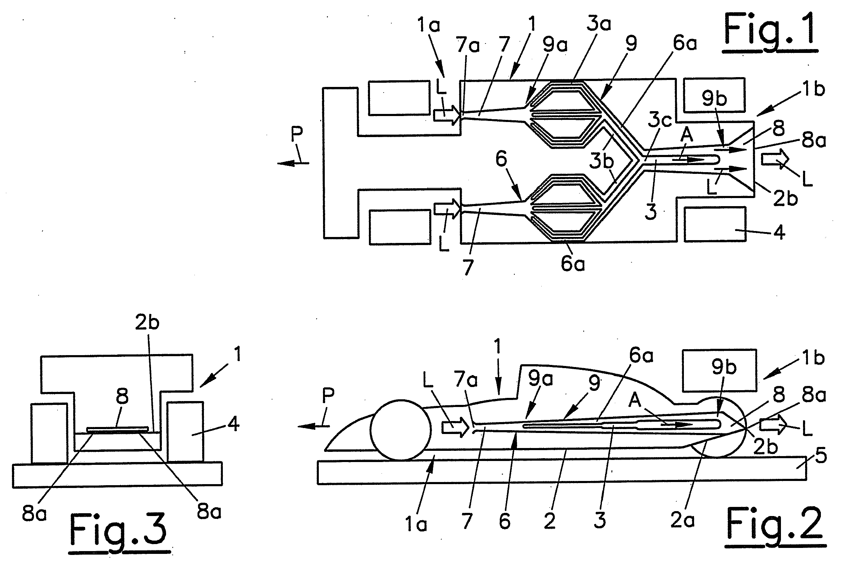

Die Fig. 1 bis Fig. 16 zeigen jeweils ein Fahrzeug 1, beispielsweise ein Rennfahrzeug, dessen Fahrzeugboden mit 2 bezeichnet ist. Der Fahrzeugboden 2 weist insbesondere im Bereich des Heckes 1b einen Diffusor 2a auf. Mit Bezugszeichen 3 ist das Auslasssystem einer nicht weiter dargestellten Brennkraftmaschine bezeichnet. Das Auslasssystem 3 weist Abgaskanäle 3a, Abgaskrümmer 3b und Abgasleitungen 3c auf. Mit Bezugszeichen 5 ist die Fahrbahn angedeutet. Im Auslasssystem 3 kann auch zumindest eine - beispielhaft in den Fig. 13 und Fig. 14 dargestellte - Abgasturbine 17 eines Abgasturboladers angeordnet sein.

Der Pfeil P deutet die Fahrtrichtung des Fahrzeuges 1 an.

Das eine wärmeabgebende Baugruppe bildende Auslasssystem 3 ist vom Mantelraum 6a (Ummantelung) eines von Luft durchströmten Raumes 6 umgeben, welcher Raum 6 sich zwischen einem Strömungseintritt 7 im Mittel- oder Frontbereich 1a des Fahrzeugs 1 und einem Strömungsaustritt 8 stromauf einer Austrittskante 2b des Diffusors 2a im Heckbereich 1b erstreckt. Hierbei wird eine Austrittsöffnung 8a teilweise durch die Austrittskante 2b des Diffusors 2a gebildet. Der Mantelraum 6a und das Auslasssystem 3 sind Teile eines Wärmetauschers 9. Die Eintrittsöffnung 7a des Strömungseintrittes 7 ist nach vorne in Fahrtrichtung P gerichtet. Das Auslasssystem 3 und der dieses zumindest teilweise umgebende Raum 6 werden in gleicher Richtung durch Abgas A bzw. Luft L durchströmt.

Durch den während der Fahrt des Fahrzeuges 1 vor der Eintrittsöffnung auftretenden Staudruck strömt Luft L beispielsweise mit 30°C in den Raum 6 ein, durchströmt den Mantelraum 6a des Wärmetauschers 9 und wird dabei auf beispielsweise 250°C erhitzt, wobei das Volumen der Luft L zunimmt. Im Bereich des Strömungsaustrittes 8 tritt die heiße Luft L mit hoher Geschwindigkeit aus der Austrittsöffnung 8a nahe der Austrittskante 2b des Diffusors 2a aus. Dadurch wird die unter dem Fahrzeugboden 2 während der Fahrt des Fahrzeuges 1 strömende Luft stark beschleunigt, was den Abtrieb des Fahrzeuges 1 wesentlich erhöht.

Unter dem Strömungseintritt 7 wird hier der Bereich des Raumes 6 verstanden, der sich zwischen der Eintrittsöffnung 7a und dem Wärmetauscher 9 erstreckt. Der Strömungsaustritt 8 ist analog dazu der Bereich, der sich zwischen dem Wärmetauscher 9 und der Austrittsöffnung 8a erstreckt.

Die Fig. 1 bis Fig. 3 zeigen eine Ausführung, bei der die Luft aus der freien Umgebung durch die Eintrittsöffnung 7a ungehindert in den Raum 6 einströmt.

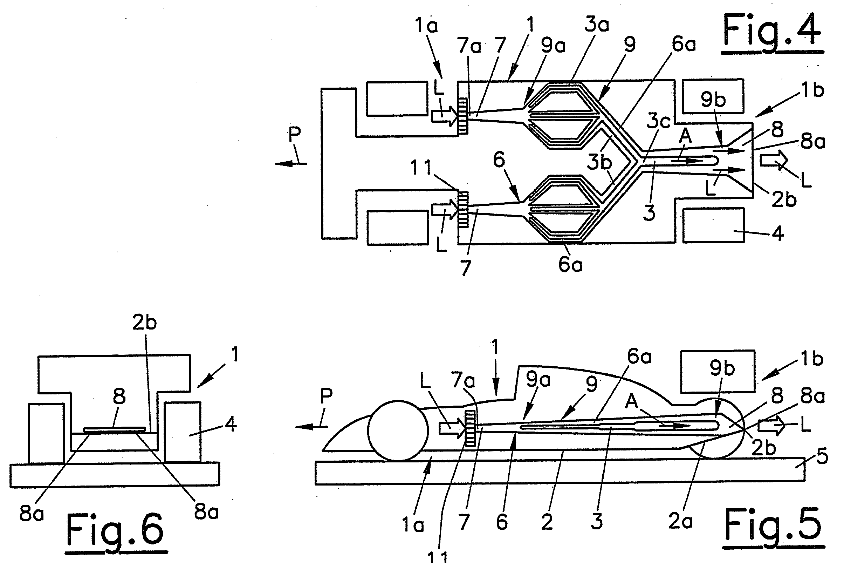

Die Fig. 4 bis Fig. 6 zeigen eine Ausführung, bei der stromaufwärts jeder Eintrittsöffnung 7a ein Fahrzeugkühler 11 eines Wasser- oder Ölkühlsystems des Fahrzeuges 1 angeordnet ist. Die Luft strömt somit durch den als Luft/Wasser- oder ein Luft/Ölwärmetauscher ausgebildeten Fahrzeugkühler 11 in den Eintrittsbereich 7 des Raumes 6 ein.

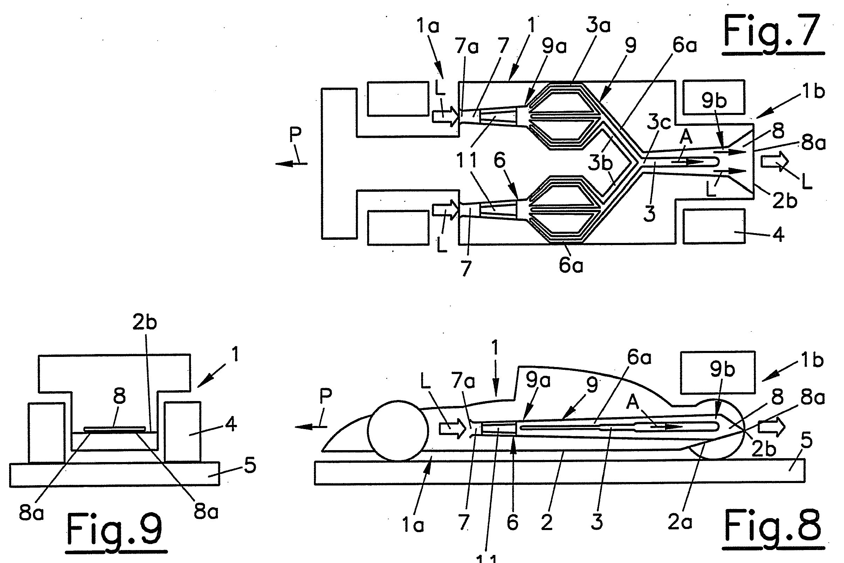

Die in den Fig. 7 bis Fig. 9 dargestellte Ausführung unterscheidet sich von der in den Fig. 4 bis Fig. 6 gezeigten Variante dadurch, dass zumindest ein Fahrzeugkühler 11 im Eintrittsbereich 7 des Raumes 6 stromabwärts der Eintrittsöffnung 7a angeordnet ist, so dass die Luft L durch den Fahrzeugkühler 11, welcher ein Luft/ Wasser- oder ein Luft/Ölwärmetauscher sein kann, in den Mantelbereich 6a des Raumes 6 einströmt.

Die Fig. 10 bis Fig. 12 zeigen eine vierte Variante, bei der die Luft in den Hinterrädern 4 benachbarten Seitenbereichen des Diffusors 2a aus dem Raum 6 ausströmt. Der Raum 6 spaltet sich dabei stromabwärts des Mantelraums 6a in zwei seitliche Austrittsbereiche 8 auf. Optional kann hierbei ein Fahrzeugkühler 11wie in den Fig. 4 bis Fig. 6 dargestellt stromauf des Eintrittsbereiches 7 oder wie in den Fig. 7 bis Fig. 9 dargestellt im Eintrittsbereich 7 angeordnet sein.

Die in den Fig. 13 bis Fig. 16 gezeigte fünfte Ausführungsvariante unterscheidet sich von der in den Fig. 10 bis Fig. 12 gezeigten vierten Variante dadurch, dass der durch einen Knick 15 gebildete Übergang, bzw. der - in Fahrtrichtung betrachtete - Anfangsbereich des Diffusors 2a lotrecht unterhalb der Hinterachse 4a des Hinterrades 4 angeordnet ist wobei die Austrittsöffnung 8a des Strömungsaustrittes 8 in einem seitlichen Bereich des Knickes 15 bzw. des Anfangsbereiches des Diffusors 2a so angeordnet ist, dass die ausströmende erwärmte Luft L nach hinten gerichtet ist und einen seitlichen Luftvorhang beidseits des Diffusors bildet. Der sich ausbildende Luftvorhang seitlich des Diffusors 2a behindert den in Fig. 16 angedeuteten Druckausgleich Δp zwischen dem Inneren 16 des Diffusors 2a und der Umgebung U des Fahrzeuges 1 (Fig. 16), so dass der im Inneren 16 des Diffusors 2a sich ausbildende Unterdruck pₛ erhalten bleibt.

Durch eine spezielle Formgebung des Raumes 6, insbesondere des Querschnittsverlaufs des Raumes 6 in Strömungsrichtung, können besonders hohe Abtriebskräfte generiert werden. So hat es sich als vorteilhaft erwiesen, wenn der Raum 6 zwischen Eintrittsöffnung 7a und einem im Anfangsbereich 9a des Wärmetauschers 9 bzw. des Mantelraumes 6a als erster Diffusorbereich 12, zwischen dem Anfangsbereich 9a und dem Endbereich 9b des Wärmetauschers 9 bzw. des Mantelbereiches 6a als zumindest ein zweiter Diffusorbereich 13, und zwischen dem Endbereich 9b des Wärmetauschers 9 und der Austrittsöffnung 8a als Düse 14 ausgebildet ist, wie schematisch in Fig. 13 dargestellt ist (in Fig. 13 ist dabei die Düse um 90° in die Zeichenebene gedreht dargestellt). Dabei kann jeder zweite Diffusorbereich 13 mehrere hintereinandergeschaltete Teilbereiche 13a, 13b, 13c aufweisen. Weiters können - insbesondere im Bereich der Abgaskanäle 3a, - auch Teilbereiche 13a', 13a" des zweiten Diffusorbereichs 13 parallel zu den Teilbereichen 13a geschaltet sein.

Wie aus den Fig. ersichtlich ist, kann der Raum 6 im Wesentlichen verästelt ausgebildet sein und - im Grundriss betrachtet - insbesondere einen - in Fahrtrichtung gesehenen - linken Ast LA und einen rechten Ast RA mit jeweils einem Eintrittsbereich 7 und Teilbereichen 13a, 13a', 13a", 13b aufweisen. Stromabwärts der Teilbereiche 13b vereinigen sich die beiden Äste LA, RA des Raumes 6 im Bereich des letzten Teilbereiches 13c des Wärmetauschers 9 zu einem gemeinsamen Sammelraum SR.

In Fig. 17 sind verschiedene für die zuvor in den Fig. 1 bis Fig. 3, Fig. 4 bis Fig. 6, Fig. 7 bis Fig. 9, Fig. 10 bis Fig. 12, oder Fig. 13 bis Fig. 16 dargestellten Ausführungen gültigen Strömungsquerschnittsflächen eingezeichnet. Mit F₀ ist der kleinste Strömungsquerschnitt der Eintrittsöffnung 7a, mit F₁ der erste Strömungsquerschnitt im Anfangsbereich 9a des Wärmetauschers 9, mit F₂ der zweite Strömungsquerschnitt im Endbereich 9b des Wärmetauschers 9 und mit F₃ der Strömungsquerschnitt der Austrittsöffnung 8a bezeichnet. Weiters sind Zwischenquerschnitte F₁₁, F₁₂, und F₁₃, am Ende der Abgaskanäle 3a, sowie am Beginn und Ende der Abgaskrümmer 3b eingetragen. Die Summe der von der Eintrittsöffnung 7a gleich entfernten Querschnittsflächen (also die ∑F₀; ∑F₁; ∑F₁₁; ∑F₁₂; ∑F₁₃; F₂) nimmt - in Strömungsrichtung der durch den Raum 6 strömenden Luft L betrachtet - zwischen dem Strömungseintritt 7, insbesondere der Eintrittsöffnung 7a, und dem Strömungsaustritt 8, insbesondere dem Ende 9b des Wärmetauschers 9, zu.

Zur Erhöhung des Abtriebs strömt Luft L durch Staudruck durch zumindest einen der Fahrtrichtung P zugewandten Strömungseintritt 7 in zumindest einen heiße Oberflächen des Auslasssystems 3, vorzugsweise Abgaskanäle 3a, Abgaskrümmer 3b, und/oder Abgasturbine 10, umgebenden Raum 6 ein. Die heißen Oberflächen des Auslasssystems 3 werden durch die Luft L umströmt, wobei die maximal mögliche Wärmemenge aufgenommen wird. Durch die Erwärmung der Luft L erhöht sich das Volumen der Luft L. Die erwärmte Luft L verlässt den Raum 6 wieder durch zumindest einen Strömungsaustritt 7 im Bereich eines durch den Fahrzeugboden 2 des Fahrzeugs 1 gebildeten Diffusor 2a mit höherer Geschwindigkeit als die Fahrtgeschwindigkeit. Die mit hoher Geschwindigkeit austretende heiße Luft L übt auf die Luft unter dem Fahrzeugboden 2 eine Saugwirkung aus. Sie erhöht deren Geschwindigkeit und damit die Saugwirkung auf den Unterboden, was zu einer deutlichen Abtriebserhöhung des Fahrzeugs 1 führt. Dabei ist es besonders vorteilhaft ist, wenn die Luft L seitlich des Diffusors 2a so ausströmt, dass ein Druckausgleich Δp zwischen der Umgebung U und dem Inneren 16 des Diffusor 2a verhindert oder verringert wird.

## Patentansprüche

1. Fahrzeug (1), insbesondere Rennfahrzeug, mit einer eine Brennkraftmaschine (4) aufweisenden Antriebseinheit, mit zumindest einem Wärme abgebenden Bauteil oder einer Wärme abgebenden Baugruppe, wobei der Bauteil oder die Baugruppe an zumindest einen von einem Arbeitsgas, insbesondere Luft, durchströmten Raum (6) grenzt, insbesondere zumindest teilweise von dem durchströmten Raum (6) umgeben ist, wobei der Raum (6) einen Strömungseintritt (7) und einen Strömungsaustritt (8) aufweist und der Strömungsaustritt (7) im Bereich einer abtriebserhöhenden Einrichtung des Fahrzeuges (1) angeordnet ist, **dadurch gekennzeichnet, dass** der durchströmte Raum (6) zwischen zumindest einem Strömungseintritt (7) und zumindest einem Strömungsaustritt (8) zumindest einen Strömungsabschnitt mit diffusorartig sich erweiterndem Strömungsquerschnitt aufweist.

2. Fahrzeug (1) nach Anspruch 1, **dadurch gekennzeichnet, dass** mindestens eine Eintrittsöffnung (7a) zumindest eines Strömungseintrittes (7) in die Fahrrichtung (P) gerichtet ist.

3. Fahrzeug (1) nach Anspruch 1 oder 2, **dadurch gekennzeichnet, dass** zumindest ein Fahrzeugkühler (11) im Bereich zumindest eines Strömungseintrittes (7) angeordnet ist, wobei vorzugsweise zumindest ein Fahrzeugkühler (11) stromaufwärts der Eintrittsöffnung (7a) des Strömungseintrittes (7) oder stromabwärts der Eintrittsöffnung (7a) des Strömungseintrittes (7) innerhalb des durchströmten Raumes (6) angeordnet ist.

4. Fahrzeug (1) nach einem der Ansprüche 1 bis 3, **dadurch gekennzeichnet, dass** die abtriebserhöhende Einrichtung durch einen vorzugsweise durch einen Fahrzeugunterboden (2) des Fahrzeuges (1) gebildeten Diffusor (2a) im Heckbereich (1b) des Fahrzeuges (1) gebildet ist, wobei zumindest eine Austrittsöffnung (8a) des Strömungsaustrittes (8) im Bereich des Diffusors (2a) angeordnet ist.

5. Fahrzeug (1) nach Anspruch 4, **dadurch gekennzeichnet, dass** zumindest eine Austrittsöffnung (8a) des Strömungsaustrittes (8) im Endbereich des Diffusors (2a) des Unterbodens (2), vorzugsweise neben oder über einer Austrittskante (2b) des Diffusors (2a), angeordnet ist, oder zumindest eine Austrittsöffnung (8a) teilweise durch eine Austrittskante (2b) des Diffusors (2a) gebildet wird.

6. Fahrzeug (1) nach Anspruch 4, **dadurch gekennzeichnet, dass** zumindest eine Austrittsöffnung (8a) des Strömungsaustrittes (8) seitlich, vorzugsweise in einem einem Hinterrad (4) des Fahrzeuges (1) zugewandten Bereich des Diffusors (2a) angeordnet ist, vorzugsweise in den Diffusor (2a) des Unterbodens (2) einmündet.

7. Fahrzeug (1) nach Anspruch 4 oder 6, **dadurch gekennzeichnet, dass** die Austrittsöffnung (8a) des Strömungsaustrittes (8) im Anfangsbereich des Diffusors (2a), vorzugsweise im Bereich eines durch einen Knick (15) gebildeten Überganges zwischen einem im Wesentlichen fahrbahnparallelen und einem - entgegen der Fahrtrichtung (P) gesehenen - ansteigenden Bereich des Fahrzeugbodens (2) angeordnet ist.

8. Fahrzeug (1) nach Anspruch 6 oder 7, **dadurch gekennzeichnet, dass** die Austrittsöffnung (8a) des Strömungsaustrittes (8) für die erwärmte Luft (L) so angeordnet ist, dass ein seitlicher Druckausgleich (Δp) zwischen der Umgebung (U) in einem seitlichen Bereich des Diffusors (2a) und dem Inneren (16) des Diffusors (2a) behindert wird.

9. Fahrzeug (1) nach einem der Ansprüche 1 bis 8, **dadurch gekennzeichnet, dass** der durchströmte Raum (6) zumindest abschnittsweise ein Mantelraum (6a) ist, welcher den Bauteil oder die Baugruppe zumindest teilweise, vorzugsweise überwiegend, umgibt.

10. Fahrzeug (1) nach einem der Ansprüche 1 bis 7, **dadurch gekennzeichnet, dass** der Wärme abgebenden Bauteil oder die Wärme abgebenden Baugruppe durch das Auslasssystem (3) der Brennkraftmaschine gebildet ist, wobei vorzugsweise das Auslasssystem (3) zumindest einen von mindestens einem durchströmten Raum (6) umgebenen Abgaskanal (3a) im Zylinderkopf der Brennkraftmaschine (4) und/oder zumindest einen von mindestens einem durchströmten Raum (6) umgebenen Abgaskrümmer (3b) und/oder zumindest eine Abgasturbine (10) aufweist.

11. Fahrzeug (1) nach Anspruch 10, **dadurch gekennzeichnet, dass** zumindest ein Abgaskrümmer (3b) einzeln ummantelt ist, wobei vorzugsweise alle Abgaskrümmer (3b) jeweils einzeln ummantelt sind und die zumindest eine Ummantelung (6a) Teil des durchströmten Raums (6) ist.

12. Fahrzeug (1) nach Anspruch 10 oder 11, **dadurch gekennzeichnet, dass** zumindest eine Abgasturbine (10) ummantelt ist, wobei vorzugsweise das Fahrzeug (1) zwei Abgasturbinen (10) oder zumindest eine Abgasturbine (10) mit zwei Abgasfluten aufweist und beide Abgasturbinen (10) oder Abgasfluten - vorzugsweise einzeln - ummantelt sind, und wobei die zumindest eine Ummantelung (6a) Teil des durchströmten Raums (6) ist.

13. Fahrzeug (1) nach einem der Ansprüche 10 bis 12, **dadurch gekennzeichnet, dass** das Auslasssystem (3) und der dieses zumindest teilweise umgebende Raum (6) in gleicher Richtung durchströmt werden.

14. Fahrzeug (1) nach einem der Ansprüche 1 bis 13, **dadurch gekennzeichnet, dass** der durchströmte Raum (6) Teil zumindest eines Wärmetauschers (9) ist.

15. Fahrzeug (1) nach einem der Ansprüche 1 bis 14, **dadurch gekennzeichnet, dass** zwischen dem zumindest einen Eintrittsbereich (7) und dem zumindest einen Austrittsbereich (8) zumindest ein von zumindest einer Eintrittsöffnung (7a) in einem definierten Abstand entfernter Strömungsquerschnitt (F₁; F₁₁; F₁₂; F₁₃) oder eine Gruppe von Strömungsquerschnitten (F₁; F₁₁; F₁₂; F₁₃) existiert, dessen Querschnittsfläche bzw. deren Summe der Querschnittsflächen (∑F₁; ∑F₁₁; ∑F₁₂; ∑F₁₃) größer ist als der kleinste Strömungsquerschnitt (F₀) der Eintrittsöffnung (7a) bzw. die Summe der kleinsten Strömungsquerschnitte (∑F₀) aller Eintrittsöffnungen (7a), und kleiner ist als der größte Strömungsquerschnitt (F₂) des Austrittsbereichs (8) bzw. die Summe der Strömungsquerschnitte aller Austrittsbereiche (8).

16. Fahrzeug (1) nach einem der Ansprüche 1 bis 15, **dadurch gekennzeichnet, dass** die Summe aller von der Eintrittsöffnung (7a) gleich entfernten Strömungsquerschnitte (F₀; F₁; F₁₁; F₁₂; F₁₃; F₂) - bei Fortschreiten in Strömungsrichtung (L) des Raumes (6) - zwischen den Strömungseintritten (7), insbesondere den Eintrittsöffnungen (7a), und der größten Querschnittsfläche des Strömungsquerschnittes (F₂) des zumindest einen Strömungsaustrittes (8) - vorzugsweise kontinuierlich - zunimmt.

17. Fahrzeug (1) nach einem der Ansprüche 1 bis 16, **dadurch gekennzeichnet, dass** die Summe der Querschnittsflächen am Beginn des oder der Strömungseintritte(s) (7) geringer ist , als die größte Querschnittsfläche (F₂) des Strömungsaustrittes (8).

18. Fahrzeug (1) nach Anspruch 14 bis 17, **dadurch gekennzeichnet, dass** der Raum (6) zwischen dem Strömungseintritt (7) und einem Anfangsbereich des Wärmetauschers (9) als erster Diffusorbereich (12) ausgebildet ist.

19. Fahrzeug (1) nach einem der Ansprüche 14 bis 18, **dadurch gekennzeichnet, dass** der Raum (6) zwischen dem Anfangsbereich (9a) und dem Endbereich (9b) des Wärmetauschers (9) als zweiter Diffusorbereich (13) ausgebildet ist, wobei vorzugsweise der zweite Diffusorbereich (13) mehrere hintereinander- und/oder parallelgeschaltete Teilbereiche (13a, 13a', 13a", 13b) aufweist.

20. Fahrzeug (1) nach Anspruch 19, **dadurch** g**ekennzeichnet,** dass der Strömungsaustritt (8) des Raumes (6) - vorzugsweise zwischen dem zweiten Strömungsquerschnitt (F₂) und der Austrittsöffnung (8a) - als Düse (14) ausgebildet ist.

21. Fahrzeug (1) nach einem der Ansprüche 1 bis 20, **dadurch gekennzeichnet, dass** der Raum (6) zumindest zwei Äste (LA, RA) mit jeweils einem Strömungseintritt (7) aufweist, wobei vorzugsweise sich die Äste (LA, RA) stromaufwärts des Strömungsaustrittes - besonders vorzugsweise im Bereich oder stromabwärts des oder der Abgaskrümmer(s) (13b) - zu einem Sammelraum (SR) vereinigen.

22. Verfahren zum Erhöhen des Abtriebs bei einem Fahrzeug (1) nach einem der Ansprüche 1 bis 21, **dadurch gekennzeichnet, dass** Luft (L) durch Staudruck durch zumindest einen der Fahrtrichtung (P) zugewandten Strömungseintritt (7) in zumindest einen heiße Oberflächen des Auslasssystems (3), vorzugsweise Abgaskanäle (3a), Abgaskrümmer (3b), und/oder Abgasturbine (10), umgebenden Raum (6) einströmt, die heißen Oberflächen des Auslasssystems (3) umströmt und dabei eine - vorzugsweise maximal mögliche - Wärmemenge aufnimmt und expandiert, und dass die heiße Luft (L) aus dem Raum (6) durch zumindest einen Strömungsaustritt (7) im Bereich eines, vorzugsweise durch den Fahrzeugboden (2) des Fahrzeugs (1) gebildeten Diffusor (2a) - besonders vorzugsweise seitlich im Anfangsbereich des Diffusors (2a) - mit höherer Geschwindigkeit als die Fahrtgeschwindigkeit so ausströmt, dass der Druck im Inneren (16) des Diffusor (2a) vermindert und/oder ein Druckausgleich (Δp) zwischen der Umgebung (U) und dem Inneren (16) des Diffusor (2a) verhindert oder verringert wird.

## Claims

1. A vehicle (1), especially a racing vehicle, comprising a drive unit having an internal combustion engine (4), and at least one heat-emitting component or one heat-emitting assembly, wherein the component or the assembly adjoins at least one chamber (6) through which a working gas, especially air, flows, and is especially at least partly surrounded by the chamber (6) through which the working gas flows, wherein the chamber (6) has a flow inlet (7) and a flow outlet (8), and the flow outlet (8) is arranged in the region of an output-increasing device of the vehicle (1), **characterised in that** the chamber (6) through which the working gas flows has at least one flow segment having a flow cross-section that expands in the manner of a diffuser between at least one flow inlet (7) and at least one flow outlet (8).

2. A vehicle (1) according to claim 1, **characterised in that** at least one inlet opening (7a) of at least one flow inlet (7) is directed in the direction of travel (P).

3. A vehicle (1) according to claim 1 or 2, **characterised in that** at least one vehicle radiator (11) is arranged in the region of at least one flow inlet (7), wherein preferably at least one vehicle radiator (11) is arranged upstream of the inlet opening (7a) of the flow inlet (7) or downstream of the inlet opening (7a) of the flow inlet (7) within the chamber (6) through which the working gas flows.

4. A vehicle (1) according to one of the claims 1 to 3, **characterised in that** the output-increasing device is formed by a diffuser (2a) in the rear region (1b) of the vehicle (1), said diffuser preferably formed by a vehicle underbody (2) of the vehicle (1), wherein at least one outlet opening (8a) of the flow outlet (8) is arranged in the region of the diffuser (2a).

5. A vehicle (1) according to claim 4, **characterised in that** at least one outlet opening (8a) of the flow outlet (8) is arranged in the end region of the diffuser (2a) of the underbody (2), preferably adjacent to or above an outlet edge (2b) of the diffuser (2a), or at least one outlet opening (8a) is partially formed by an outlet edge (2b) of the diffuser (2a).

6. A vehicle (1) according to claim 4, **characterised in that** at least one outlet opening (8a) of the flow outlet (8) is arranged to the side of the diffuser (2a), preferably in a region of the diffuser (2a) facing a rear wheel (4) of the vehicle (1), preferably opening into the diffuser (2a) of the underbody (2).

7. A vehicle (1) according to claim 4 or 6, **characterised in that** the outlet opening (8a) of the flow outlet (8) is arranged in the initial region of the diffuser (2a), preferably in the region of a transition formed by a bend (15) between a region of the underbody (2) which is substantially parallel to the carriageway and a region of the underbody (2) which rises as seen in the opposite direction to the direction of travel (P).

8. A vehicle (1) according to claim 6 or 7, **characterised in that** the outlet opening (8a) of the flow outlet (8) for the heated air (L) is arranged in such a way that lateral pressure compensation (Δp) is obstructed between the ambient environment (U) in a lateral region of the diffuser (2a) and the interior (16) of the diffuser (2a).

9. A vehicle (1) according to one of the claims 1 to 8, **characterised in that** the chamber (6) through which the working gas flows is a jacket chamber (6a) at least in sections, which surrounds the component or the assembly at least in part, but preferably predominantly.

10. A vehicle (1) according to one of the claims 1 to 7, **characterised in that** the heat-emitting component or heat-emitting assembly is formed by the exhaust system (3) of the internal combustion engine, wherein preferably the exhaust system (3) comprises in the cylinder head of the internal combustion engine (4) at least one exhaust duct (3a) surrounded by at least one chamber (6) through which the working gas flows and/or at least one exhaust-gas manifold (3b) surrounded by at least one chamber (6) through which the working gas flows, and/or at least one exhaust-gas turbine (10).

11. A vehicle (1) according to claim 10, **characterised in that** at least one exhaust-gas manifold (3b) is encased individually, wherein preferably all exhaust-gas manifolds (3b) are each encased individually, and the at least one encasing (6a) is part of the chamber (6) through which the working gas flows.

12. A vehicle (1) according to claim 10 or 11, **characterised in that** at least one exhaust-gas turbine (10) is encased, wherein preferably the vehicle (1) comprises two exhaust-gas turbines (10) or at least one exhaust-gas turbine (10) with two exhaust-gas flows, and both exhaust gas turbines (10) or exhaust-gas flows are encased, preferably individually, and wherein the at least one encasing (6a) is part of the chamber (6) through which the working gas flows.

13. A vehicle (1) according to one of the claims 10 to 12, **characterised in that** the outlet system (3) and the chamber (6) which surrounds said system at least in part are flowed through in the same direction.

14. A vehicle (1) according to one of the claims 1 to 13, **characterised in that** the chamber (6) through which the working gas flows is part of at least one heat exchanger (9).

15. A vehicle (1) according to one of the claims 1 to 14, **characterised in that** between the at least one inlet region (7) and the at least one outlet region (8) at least one flow cross-section (F₁; F₁₁; F₁₂; F₁₃) or a group of flow cross-sections (F₁; F₁₁; F₁₂; F₁₃) exists which is remote at a defined distance from at least one inlet opening (7a), and whose cross-sectional surface or its sum total of cross-sectional surfaces (∑F₁; ∑F₁₁; ∑F₁₂; ∑F₁₃) is greater than the smallest flow cross-section (F₀) of the inlet opening (7a) or the sum total of the smallest flow cross-sections (∑F₀) of all inlet openings (7a), and smaller than the greatest flow cross-section (F₂) of the outlet region (8) or the sum total of the flow cross-sections of all outlet regions (8).

16. A vehicle (1) according to one of the claims 1 to 15, **characterised in that** the sum total of all flow cross-sections (F₀; F₁; F₁₁; F₁₂; F₁₃; F₂) which are equally distanced from the inlet opening (7a) increases upon progression in the direction of flow (L) of the chamber (6) between the flow inlets (7), especially the inlet openings (7a), and the greatest cross-sectional surface of the flow cross-section (F₂) of the at least one flow outlet (8), preferably in a continuous manner.

17. A vehicle (1) according to one of the claims 1 to 16, **characterised in that** the sum total of the cross-sectional surfaces at the beginning of the flow inlet(s) (7) is lower than the greatest cross-sectional surface (F₂) of the flow outlet (8).

18. A vehicle (1) according to claim 14 to 17, **characterised in that** the chamber (6) between the flow inlet (7) and an initial region of the heat exchanger (9) is formed as a first diffuser region (12).

19. A vehicle (1) according to one of the claims 14 to 18, **characterised in that** the chamber (6) between the initial region (9a) and the end region (9b) of the heat exchanger (9) is formed as a second diffuser region (13), wherein preferably the second diffuser region (13) comprises several subregions (13a, 13a', 13a", 13b) which are switched in succession and/or in parallel.

20. A vehicle (1) according to claim 19, **characterised in that** the flow cross-section (8) of the chamber (6) is formed as a nozzle (14), preferably between the second of flow cross-section (F₂) and the outlet opening (8a).

21. A vehicle (1) according to one of the claims 1 to 20, **characterised in that** the chamber (6) comprises at least two branches (LA, RA) with one flow inlet (7) each, wherein preferably the branches (LA, RA) join each other to form a collecting chamber (SR) upstream of the flow outlet, especially preferably in the region or downstream of the exhaust manifold(s) (13b).

22. A method for increasing the output in a vehicle (1) according to one of the claims 1 to 21, **characterized in that** air (L) flows by dynamic pressure through at least one flow inlet (7) facing the direction of travel (P) into a chamber (6) surrounding hot surfaces of the exhaust system (3), preferably exhaust-gas ducts (3a), exhaust-gas manifolds (3b) and/or an exhaust-gas turbine (10), flows around the hot surfaces of the exhaust system (3) and absorbs a thermal quantity, preferably the maximum possible thermal quantity, and expands, and the hot air (L) flows out of the chamber (6) at a higher speed than the travelling speed through at least one flow outlet (7) in the region of a diffuser (2a), which is preferably formed by the vehicle underbody (2) of the vehicle (1), more preferably laterally in the initial region of the diffuser (2a), in such a way that the pressure in the interior (16) of the diffuser (2a) is decreased and/or pressure compensation (Δp) is prevented or decreased between the ambient environment (U) and the interior (16) of the diffuser (2a).

## Revendications

1. Véhicule (1), notamment véhicule de course comportant une unité d'entraînement avec un moteur à combustion interne (4) et au moins un composant dégageant de la chaleur ou un module dégageant de la chaleur,
- le composant ou le module étant adjacent à au moins un volume traversé (6) par un gaz de travail, notamment l'air, en étant notamment partiellement entouré par le volume traversé (6),
le volume (6) ayant une entrée de passage (7) et une sortie de passage (8) et la sortie de passage (8) étant située dans la région d'une installation du véhicule (1) augmentant la puissance fournie,
véhicule **caractérisé en ce que**
le volume (6), traversé comporte au moins un segment de passage avec une section de passage qui s'élargie à la manière d'un diffuseur entre au moins une entrée de passage (7) et au moins une sortie de passage (8).

2. Véhicule (1) selon la revendication 1,
**caractérisé en ce qu'**
au moins un orifice d'entrée (7a) d'au moins une entrée de passage (7) étant orienté dans la direction de circulation (P).

3. Véhicule (1) selon la revendication 1 ou 2,
**caractérisé en ce qu'**
au moins un radiateur (11), du véhicule se trouve dans la région d'au moins une entrée de passage (7),
- au moins de préférence, un radiateur (11) du véhicule étant en amont de l'orifice d'entrée (7a) de l'entrée de passage (7) ou en aval de l'orifice d'entrée (7a) de l'entrée de passage (7) à l'intérieur du volume traversé (6).

4. Véhicule (1) selon l'une des revendications 1 à 3,
**caractérisé en ce que**
l'installation augmentant la puissance est de préférence un diffuseur (2a) formé par le fond (2) du véhicule (1), dans la zone arrière (1b) du véhicule (1) et au moins un orifice de sortie (8a) de la sortie de passage (8) se trouve dans la région du diffuseur (2a).

5. Véhicule (1) selon la revendication 4,
**caractérisé en ce qu'**
au moins un orifice de sortie (8a) de la sortie de passage (8) se trouve dans la zone d'extrémité du diffuseur (2a) du fond (2), de préférence à côté ou au-dessus de l'arête de sortie (2b) du diffuseur (2a) ou au moins un orifice de sortie (8a) est formé partiellement par l'arrête de sortie (2b) du diffuseur (2a).

6. Véhicule (1) selon la revendication 4,
**caractérisé en ce qu'**
au moins un orifice de sortie (8a) de la sortie de passage (8) se trouve latéralement, de préférence dans la zone du diffuseur (2a) tournée vers une roue arrière (4) du véhicule (1), en débouchant de préférence dans le diffuseur (2a) du fond (2).

7. Véhicule (1) selon la revendication 4 ou 6,
**caractérisé en ce que**
l'orifice de sortie (8a) de la sortie de passage (8) se trouve dans la zone initiale du diffuseur (2a) de préférence dans la zone d'un passage formé par un pli (15) entre une zone du dessous (2) pratiquement parallèle à la surface de circulation et une zone montante (vue dans le sens opposé à la direction de circulation (P)).

8. Véhicule (1) selon la revendication 6 ou 7,
**caractérisé en ce que**
l'orifice de sortie (8a) de la sortie de passage (8) est prévue pour l'air réchauffé (L) de façon à éviter un équilibrage latéral de pression (Δp) entre l'environnement (U) dans une zone latérale du diffuseur (2a) et l'intérieur (16) du diffuseur (2a).

9. Véhicule (1) selon l'une des revendications 1 à 8,
**caractérisé en ce que**
le volume traversé (6) est, au moins par segments, un espace-enveloppe (6a) qui entoure au moins partiellement, de préférence principalement, le composant de module.

10. Véhicule (1) selon l'une des revendications 1 à 7,
**caractérisé en ce que**
la pièce dégageant la chaleur ou le module dégageant la chaleur est constitué par le système d'échappement (3) du moteur à combustion interne, et de préférence le système d'échappement (3) a au moins un canal de gaz d'échappement (3a) entouré par le volume traversé (6), dans la culasse du moteur à combustion interne (4) et/ou au moins un collecteur de gaz d'échappement (3b) entouré par au moins un volume traversé (6) et/ou au moins une turbine de gaz d'échappement (10).

11. Véhicule (1) selon la revendication 10,
**caractérisé en ce qu'**
au moins un collecteur de gaz d'échappement (3b) est enveloppé séparément et de préférence tous les collecteurs de gaz d'échappement (3b) sont enveloppés chaque fois séparément et au moins une enveloppe (6a) fait partie du volume traversé (6).

12. Véhicule (1) selon la revendication 10 ou 11,
**caractérisé en ce qu'**
au moins une turbine à gaz (10) est enveloppée,
- de préférence le véhicule (1) comporte deux turbines à gaz (10) ou au moins une turbine à gaz (10) avec deux flux de gaz d'échappement et les deux turbines à gaz (10) ou les flux de gaz d'échappement sont enveloppés de préférence séparément, et
- au moins une enveloppe (6a) fait partie du volume traversé (6).

13. Véhicule (1) selon l'une des revendications 10 à 12,
**caractérisé en ce que**
le système d'échappement (3) et le volume (6) qui entoure au moins partiellement celui-ci sont traversés dans la même direction.

14. Véhicule (1) selon l'une des revendications 1 à 13,
**caractérisé en ce que**
le volume traversé (6) fait partie au moins d'un échangeur de chaleur (9).

15. Véhicule (1) selon l'une des revendications 1 à 14,
**caractérisé en ce qu'**
au moins une zone d'entrée (7) et au moins une zone de sortie (8), il y a au moins une section de passage (F₁, F₁₁, F₁₂, F₁₃) ou un groupe de section de passage (F₁, F₁₁, F₁₂, F₁₃) distant d'une distance définie d'au moins un orifice d'entrée (7a), et dont la surface de la section ou la somme des surfaces de section (∑F₁, ∑F₁₁, ∑F₁₂, ∑F₁₃) est supérieure à la plus petite section de passage (F₀) de l'orifice d'entrée (7a) ou la somme des sections de passage les plus petites (∑F₀) de tous les orifices d'entrée (7a) est inférieure à la plus grande section de passage (F₂) de la zone de sortie (8) ou la somme des sections de passage de toutes les zones de sortie (8).

16. Véhicule (1) selon l'une des revendications 1 à 15,
**caractérisé en ce que**
la somme de toutes les sections de passage (F₀, F₁, F₁₁, F₁₂, F₁₃, F₂) équidistantes de l'orifice d'entrée (7a) (en progressant dans la direction de passage (L) du volume (6)) entre les entrées de passage (7), notamment les orifices d'entrée (7a) et de la plus grande section de la section de passage (F₂) d'au moins une sortie de passage (8), augmente de préférence en continu.

17. Véhicule (1) selon l'une des revendications 1 à 16,
**caractérisé en ce que**
la somme des surfaces des sections au début de la ou des sections de passage (7) est inférieure à la plus grande surface de section (F₂) de la sortie de passage (8).

18. Véhicule (1) selon les revendications 14 à 17,
**caractérisé en ce que**
le volume (6) compris entre l'entrée de passage (7) et la zone de début de l'échangeur de chaleur (9) est réalisé comme première zone de diffuseur (12).

19. Véhicule (1) selon l'une des revendications 14 à 18,
**caractérisé en ce que**
le volume (6) compris entre la zone initiale (9a) et la zone terminale (9b) de l'échangeur de chaleur (9) est réalisé sous la forme d'une seconde zone de diffuseur (13),
- de préférence la seconde zone de diffuseur (13) comporte plusieurs zones partielles (13a, 13a', 13a", 13b), situées l'une derrière l'autre et/ou en parallèle.

20. Véhicule (1) selon l'une des revendications 1 à 19,
**caractérisé en ce que**
la sortie de passage (8) du volume (6) (de préférence entre la seconde section de passage (F₂) et la sortie (8a)) est réalisée comme buse (14).

21. Véhicule (1) selon l'une des revendications 1 à 20,
**caractérisé en ce que**
le volume (6) comporte au moins deux branches (LA, RA) avec chaque fois une entrée de passage (7),
- de préférence les branches (LA, RA) en amont de la sortie de passage, d'une manière particulièrement préférentielle, dans la zone ou en aval du ou des collecteurs de gaz d'échappement (13b) se rejoignent pour former une chambre collectrice (SR).

22. Procédé pour augmenter la puissance dans le cas d'un véhicule (1) selon l'une des revendications 1 à 21,
**caractérisé en ce que**
du fait de la pression dynamique l'air (L), entre à travers au moins une entrée de passage (7) tournée dans la direction de circulation (P), dans au moins un volume (6) entourant les surfaces chaudes du système d'échappement (3), de préférence des canaux de gaz d'échappement (3a), les collecteurs de gaz d'échappement (3b) et/ou la turbine de gaz d'échappement (10), en circulant autour des surfaces chaudes du système d'échappement (3) et recevant ainsi une quantité, de préférence maximale possible, de chaleur et se dilatant, et
l'air chaud (L) sortant du volume (6) à travers au moins une sortie de passage (8) dans la zone d'un diffuseur (2a) réalisé de préférence par le fond (2) du véhicule (1) - de préférence, notamment latéralement de la zone de début de diffuseur (2a), en sortant à vitesse plus élevée que la vitesse de circulation, pour que la pression à l'intérieur (16) du diffuseur (2a) soit réduite et/ou évite ou réduit l'équilibrage de pression (Δp) entre la pression ambiante (U) et l'intérieur (16) du diffuseur (2a).
